# DEMANDE DE BREVET EUROPEEN

(11) **EP 1 586 802 A1**
(43) Date de publication de la demande: **19.10.2005**
(21) Numéro de dépôt: 05290803.5
(22) Date de dépôt: 12.04.2005
(51) Int. Cl.: F16L 41/06

(54) **Procédé pour raccorder une conduite de dérivation à une canalisation principale et réseau souterrain de distribution de fluide**

(30) Priorité: 15.04.2004 FR 0403948
(71) Demandeur: GAZ DE FRANCE, 75017 Paris (FR)
(72) Inventeur: Darut, Alain, 78400 Chatou (FR); Bideault, Jean-Michel, 95630 Meriel (FR); Hardy, Michel, 92700 Colombes (FR)
(74) Mandataire: Arnaud, Jean

(57) **Abrégé**

Procédé dans lequel on réalise les opérations suivantes :
a) creuser un puits de fouille (8) de manière à dégager une canalisation principale (2) présentant un bord supérieur (10) s'étendant à un niveau supérieur (12) sensiblement constant par rapport au sol (6),
b) utiliser une prise de branchement (14) présentant une surface d'appui (16) et un fût (18) auquel est raccordée la conduite de dérivation,
c) positionner la surface d'appui (16) (14) contre la canalisation principale (2), de sorte que le fût (18) soit sous ledit niveau supérieur (12) de la canalisation principale (2),
d) fixer la prise de branchement (14) sur la canalisation principale (2),
e) mettre en communication la conduite de dérivation et la canalisation principale (2),
f) reboucher le puits de fouille (8), en maintenant la conduite de dérivation sous le niveau supérieur (12) de la canalisation principale (2).

## Description

L'invention concerne un procédé pour raccorder une conduite de dérivation à une canalisation principale et un réseau (ou une portion de réseau) souterrain de distribution de fluide tel que du gaz ou de l'eau.

Il est usuel de poser des prises de branchement sur des canalisations principales dans lesquelles circule un fluide tel notamment que du gaz ou de l'eau pour alimenter une nouvelle habitation.

La pose de ces prises de branchement comprend les opérations suivantes :
a) creuser, depuis le sol, un puits de fouille de manière à dégager un tronçon de la canalisation principale présentant un bord supérieur s'étendant à un niveau supérieur sensiblement constant par rapport au sol,
b) utiliser une prise de branchement présentant une surface d'appui en forme de portion de cylindre et un fût s'étendant sensiblement perpendiculairement à la surface d'appui auquel est raccordée la conduite de dérivation,
c) positionner la surface d'appui de la prise de branchement contre la canalisation principale,
d) fixer la prise de branchement sur la canalisation principale,
e) mettre en communication la conduite de dérivation et la canalisation principale,
f) reboucher le puits de fouille.

Ainsi, le document US-4 431 017 décrit une prise de branchement qui peut être posée latéralement, et qui, dans cette position de montage, comporte un obturateur et son dispositif de commande qui sont orientés vers le haut.

L'invention a pour but de limiter la gêne causée à la circulation des piétons et des véhicules par le puits de fouille, à faciliter la pose de la prise de branchement, à en réduire la durée et finalement à en baisser le coût.

Pour ce faire conformément à l'invention, lors de l'étape c), on positionne le fût de la prise de branchement, avec sa dérivation, entièrement sous ledit niveau supérieur de la canalisation principale, voire sensiblement à ce niveau, et lors de l'étape f), on maintient la conduite de dérivation sous le niveau supérieur de la canalisation principale voire sensiblement au niveau supérieur de la canalisation principale par rapport au sol.

Ainsi, contrairement à ce qui était pratiqué jusqu'alors, la pose de la prise de branchement ne réduit pas la distance séparant le sol de tout élément destiné à permettre la circulation du fluide (canalisation principale, conduite de dérivation, prise de branchement,...). Par conséquent, il est possible de remonter le niveau des canalisations par rapport au sol, et donc de réduire la profondeur du puits de fouille, tout en respectant les règles de sécurité imposant une distance minimale entre le sol et tout élément destiné à la circulation du fluide. Le puits étant moins profond, sa réalisation et son rebouchage nécessitent moins de temps et la quantité de terre à stocker à proximité du puits dans l'intervalle est moins importante. En outre, la canalisation étant moins profonde, la pose de la prise de branchement s'en trouve facilitée.

Selon une caractéristique complémentaire, conformément à l'invention, on utilise une prise de branchement présentant une dérivation s'étendant perpendiculairement au fût, lors de l'étape b), on raccorde la conduite de dérivation sur la dérivation, et lors de l'étape c), on positionne la dérivation sensiblement parallèlement à la canalisation principale.

Ainsi, les dimensions du puits de fouille sont optimisées et la pose de la prise de branchement sans risque de fuite est facilitée.

Afin d'améliorer encore la pose de la prise de branchement, conformément à l'invention, le procédé présente les caractéristiques suivantes :
- on utilise un dispositif de pose comprenant un support, des moyens pour fixer la prise de branchement sur le support et des moyens pour mettre en pression la surface d'appui de la prise de branchement contre la canalisation principale,
- lors de l'étape c), on positionne le support depuis le sol, et
- lors de l'étape d), on actionne les moyens pour mettre en pression la surface d'appui de la prise de branchement contre la canalisation principale depuis le sol.

Ainsi la section du puits de fouille peut être réduit. Sa réalisation et son rebouchage seront pas conséquent plus brefs.

L'invention concerne en outre un réseau souterrain, ou une portion de réseau souterrain, de distribution de fluide tel que du gaz ou de l'eau, ledit réseau comprenant :
- au moins une canalisation principale, ladite canalisation principale présentant un bord supérieur s'étendant à un niveau supérieur sensiblement constant sous le sol,
- une pluralité de prises de branchement fixées sur la canalisation principale comprenant chacune un fût s'étendant sensiblement perpendiculairement à la canalisation principale,
- une pluralité de conduites de dérivation s'étendant dans le sol, chaque conduite de dérivation étant reliée à la canalisation principale par l'intermédiaire de l'une des prises de branchement, pour la circulation du fluide.

Conformément à l'invention, pour résoudre les problèmes précités, le fût de chacun des prises de branchement et chacune des conduites de dérivation sont entièrement sous ledit niveau supérieur de la canalisation principale, voire sensiblement au niveau supérieur de la canalisation principale par rapport au sol.

Outre les avantages précités, le positionnement de la conduite de dérivation et du fût de la prise de dérivation, dont la résistance à un outil de creusement (pelle ou pioche notamment) est inférieure à celle de la canalisation principale, sous le niveau supérieur de la canalisation principale réduit le risque d'endommagement éventuel lorsqu'un nouveau puits de fouille viendrait à être réalisé à proximité de la prise de branchement.

Selon une autre caractéristique avantageuse conforme à l'invention, le niveau supérieur de la canalisation principale s'étend à une distance du sol comprise entre 40 centimètres et 50 centimètres.

Ainsi, la canalisation principale, la prise de branchement et la conduite de dérivation sont disposées sous une hauteur de terrain les protégeant efficacement, tout en n'étant pas trop profondes pour être assez facilement accessibles.

L'invention va apparaître encore plus clairement dans la description qui va suivre, faite en référence aux dessins annexés dans lesquels :

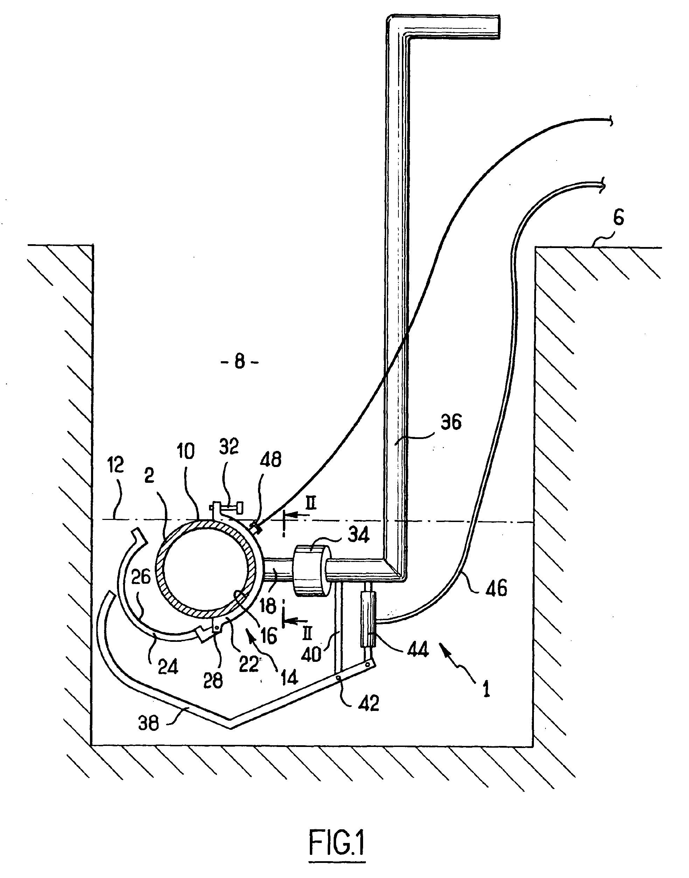

- la figure 1 est une représentation schématique d'une première étape d'un procédé conforme à l'invention,
- la figure 2 est une vue en coupe selon la ligne repérée II-II à la figure 1,
- la figure 3 est une représentation d'une deuxième étape du procédé.

Les figures illustrent un dispositif 1 lors de la pose d'une prise de branchement 14 sur une canalisation principale 2.

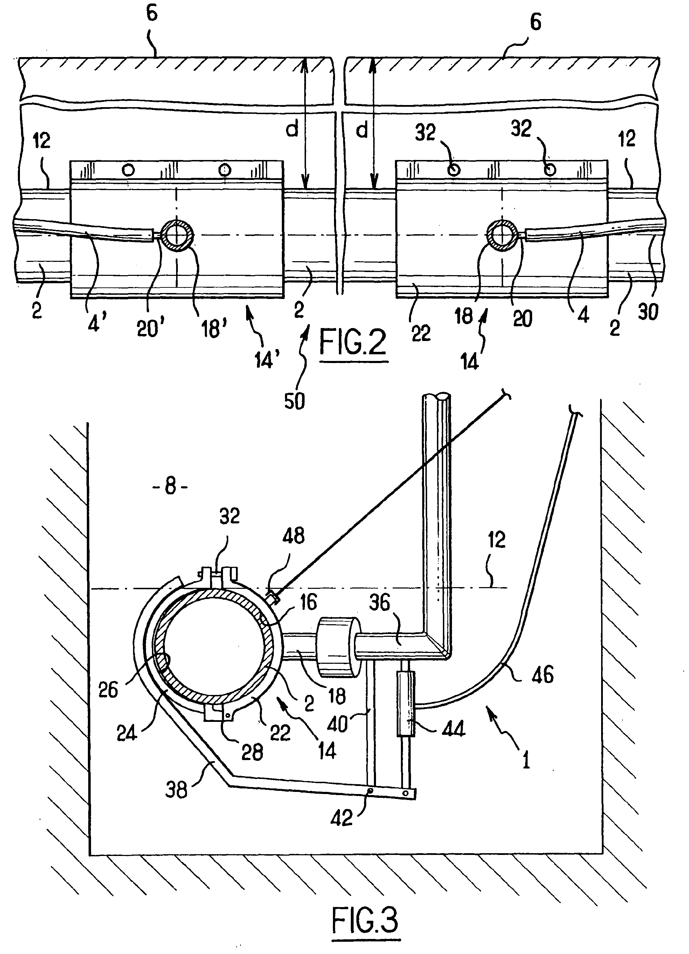

La prise de branchement 14 comprend essentiellement une selle principale 22 intégrant un fût 18 et une dérivation 20 (visible uniquement à la figure 2), une selle de fixation 24 et des vis de fixation 32. La selle principale 22 présente une surface d'appui 16 sensiblement hémicylindrique de section circulaire présentant une direction d'allongement 30. De même, la selle de fixation 24 présente une surface d'appui 26 sensiblement hémicylindrique de section circulaire complémentaire de la surface d'appui 16 de la selle principale 22.

Dans la technique considérée, un fût est un tronçon de tube dont l'axe recoupe perpendiculairement l'axe de la canalisation, et dont part une dérivation d'axe recoupant perpendiculairement celui du fût.

La selle de fixation 24 et la selle principale 22 sont reliées l'une à l'autre à une extrémité des surfaces d'appui 16, 26, ici par l'intermédiaire d'une articulation en rotation 28 autour d'un axe parallèle à la direction d'allongement 30, de type chape.

La dérivation 20 est sensiblement tubulaire et s'étend sensiblement perpendiculairement au fût 18 dans laquelle elle débouche. Le fût 18 est également sensiblement tubulaire. Il s'étend perpendiculairement à la direction d'allongement 30 de la surface d'appui 16, entre la surface d'appui 16 dans laquelle il débouche et une extrémité filetée extérieurement sur laquelle est fixé un adaptateur 34 appartenant au dispositif de pose 1.

Outre l'adaptateur 34, le dispositif 1 comprend un support 36, un sabot 38 articulé en rotation par rapport à une tige 40, solidaire du support 36, autour d'un axe d'articulation 42 parallèle à la direction d'allongement 30 et des moyens pour déplacer le sabot 38 par rapport au support 36 autour de l'axe d'articulation 42. Ces moyens sont ici constitués par un vérin 44 hydraulique ou pneumatique. On pourrait prévoir également d'autres types de vérins ou d'autres moyens mécaniques analogues.

Pour raccorder une conduite de dérivation 4 à la canalisation principale 2, on creuse depuis le sol 6 un puits de fouille 8 jusqu'à dégager un espace autour d'un tronçon de la canalisation principale 2. On nettoie et on gratte l'extérieur du tronçon de canalisation principale 2. On raccorde la conduite de dérivation 4 à la dérivation 20 de la prise de branchement 14 et on fixe la prise de branchement 14 sur le support 36 du dispositif 1. On actionne le vérin 44 pour placer le sabot 38 dans une position ouverte, la selle de fixation 24 venant contre le sabot 38 et étant sensiblement à l'écart de la selle principale 22.

Ensuite, on descend la prise de branchement 14 reliée à la conduite de dérivation 4 dans le puits de fouille 6, le fût 18 de la prise de branchement 14 étant sensiblement parallèle au sol 6. On positionne la surface d'appui 16 de la selle principale 22 contre la canalisation principale 2. La canalisation principale 2 étant sensiblement tubulaire, on amène la direction d'allongement 30 de la surface d'appui 16 en concordance avec l'axe d'allongement 52 de la canalisation principale 2.

Tel qu'illustré à la figure 2, on positionne la dérivation 20 sensiblement parallèlement à la canalisation principale 2 et à la direction d'allongement 30.

La canalisation principale 2 présente un bord supérieur 10 s'étendant à un niveau supérieur 12 et qui est à une distance d sensiblement constante par rapport au sol 6. Le fût 18 de la canalisation principale étant disposé sensiblement horizontalement, il est situé sous ce niveau supérieur 12, de même que la dérivation 20.

Puis, on actionne le vérin 44 depuis le sol 6 par l'intermédiaire de moyens d'alimentation 46 reliés au vérin 44. Le sabot 38 pivote autour de l'axe d'articulation 42 et pousse la selle de fixation 24 vers la selle principale 22 par pivotement autour de l'articulation 28, jusqu'à ce que le sabot 38 arrive dans une position fermée dans laquelle il applique la selle de fixation 24 contre la canalisation principale 2.

On fixe ensuite la selle principale 22 et la selle de fixation 24, ici par vissage, du côté opposé à l'articulation 28 par rapport aux surfaces d'appui 16,26.

Puis, on soude la selle principale 22, par l'intermédiaire d'une résistance électrique reliée aux connecteurs électriques 48. La résistance électrique est noyée dans la selle principale 22, à proximité de la surface d'appui 16.

Ensuite, le sabot 38 est amené en position ouverte et le dispositif est séparé de la selle principale 22 par l'intermédiaire de l'adaptateur 34.

Enfin, on perce la canalisation principale 2 en déplaçant par translation hélicoïdale (vissage) un perforateur intégré au fût 18. La conduite de dérivation 4 communique alors avec la canalisation principale 2 par l'intermédiaire du fût 18.

Puis, on rebouche le puits de fouille 8, en veillant à maintenir la conduite de dérivation sous le niveau supérieur 12 de la canalisation principale 2.

En renouvelant l'opération autant de fois que nécessaire, tel qu'illustré à la figure 2, on réalise un réseau 50 de distribution de fluide, en particulier d'eau ou de gaz. Ainsi, une deuxième prise de branchement 14', identique la prise de branchement 14 et comprenant un fût 18' et une dérivation 20', relie une autre conduite de dérivation 4' à la canalisation principale 2. Le niveau supérieur 12 de la canalisation principale 2 est également situé sensiblement à la distance d du sol 6. Le fût 18' et la conduite de dérivation s'étendent tous deux sous le niveau supérieur 12. Le fût 18' s'étend sensiblement horizontalement et sensiblement perpendiculairement à la canalisation principale 2 et plus précisément à son axe d'allongement 52. La conduite de dérivation 4' s'étend sensiblement parallèlement à l'axe d'allongement 52 de la canalisation principale 2 à proximité de la prise de branchement 14'.

Le niveau supérieur 12 est avantageusement disposé à une distance d sous le sol 6 comprise entre 40 centimètres et 50 centimètres.

Pour améliorer la lecture des figures, l'épaisseur de la canalisation principale 2, de la selle principale 22 et de la selle de fixation 24 ont été agrandies. En réalité, ces épaisseurs sont généralement comprises entre 1 et quelques millimètres pour des diamètres de canalisation principale généralement compris entre 40 millimètres et 250 millimètres.

## Revendications

1. Procédé pour raccorder une conduite de dérivation (4) à une canalisation principale (2), dans lequel on réalise les opérations suivantes :
a) creuser, depuis le sol (6), un puits de fouille (8) de manière à dégager un tronçon de la canalisation principale (2) présentant un bord supérieur (10) s'étendant à un niveau supérieur (12) sensiblement constant par rapport au sol (6),
b) utiliser une prise de branchement (14) présentant une surface d'appui (16) en forme de portion de cylindre et un fût (18) s'étendant sensiblement perpendiculairement à la surface d'appui (16) et muni d'une dérivation (20) sensiblement perpendiculaire au fût (18) et à laquelle est raccordée la conduite de dérivation (4),
c) positionner la surface d'appui (16) de la prise de branchement (14) contre la canalisation principale (2),
d) fixer la prise de branchement (14) sur la canalisation principale (2),
e) mettre en communication la conduite de dérivation (4) et la canalisation principale (2),
f) reboucher le puits de fouille (8),
**caractérisé en ce que** lors de l'étape c), on positionne le fût (18) de la prise de branchement (14), avec sa dérivation (20), entièrement sous ledit niveau supérieur (12) de la canalisation principale (2), voire sensiblement au niveau supérieur (12) de la canalisation principale (2) par rapport au sol (6), et lors de l'étape f), on maintient la conduite de dérivation (4) sous le niveau supérieur (12) de la canalisation principale (2) voire sensiblement au niveau supérieur (12) de la canalisation principale (2) par rapport au sol (6).

2. Procédé selon la revendication 1, **caractérisé en ce que** :
- lors de l'étape b), on raccorde la conduite de dérivation (4) sur la dérivation (20), et
- lors de l'étape c), on positionne la dérivation (20) sensiblement parallèlement à la canalisation principale (2).

3. Procédé selon la revendication 1 ou la revendication 2, **caractérisé en ce que** :
- on utilise un dispositif de pose (1) comprenant un support (36), des moyens (34) pour fixer la prise de branchement (14) sur le support (36) et des moyens pour mettre en pression la surface d'appui (16) de la prise de branchement (14) contre la canalisation principale (2),
- lors de l'étape c), on positionne le support (36) depuis le sol (6), et
- lors de l'étape d), on actionne les moyens pour mettre en pression la surface d'appui (16) de la prise de branchement (14) contre la canalisation principale (2) depuis le sol (6).

4. Portion de réseau souterrain (50) de distribution de fluide tel que du gaz ou de l'eau, ladite portion de réseau comprenant :
- au moins une canalisation principale (2), ladite canalisation principale (2) présentant un bord supérieur (10) s'étendant à un niveau supérieur (12) sensiblement constant sous le sol (6)
- une pluralité de prises de branchement (14, 14') fixées sur la canalisation principale (2) comprenant chacune un fût (18, 18') s'étendant sensiblement perpendiculairement à la canalisation principale,
- une pluralité de conduites de dérivation (4, 4') s'étendant dans le sol (6), chaque conduite de dérivation (4, 4') étant reliée à la canalisation principale (2) par l'intermédiaire de l'une des prises de branchement (14, 14'), pour la circulation du fluide,
ladite portion de réseau étant **caractérisée en ce que** le fût (18, 18') de chacune des prises de branchement (14, 14') et chacune des conduites de dérivation (4, 4') sont entièrement sous ledit niveau supérieur (12) de la canalisation principale (2), voire sensiblement au niveau supérieur (12) de la canalisation principale (2) par rapport au sol (6).

5. Portion de réseau selon la revendication 4, **caractérisée en ce que** le niveau supérieur (12) de la canalisation principale (2) s'étend à une distance (d) du sol (6) comprise entre 40 centimètres et 50 centimètres.

6. Portion de réseau selon la revendication 4 ou la revendication 5, **caractérisée en ce que** la canalisation principale (2) s'étend suivant un axe d'allongement et les conduites de dérivation (4, 4') s'étendent sensiblement parallèlement à l'axe d'allongement de la canalisation principale (2) à proximité de la prise de branchement (14, 14').
